# FASCICULE DE BREVET EUROPEEN

(11) **EP 2 456 636 B1**
(45) Date de publication et mention de la délivrance du brevet: **23.01.2019**
(21) Numéro de dépôt: 10736753.4
(22) Date de dépôt: 07.07.2010
(51) Int. Cl.: B60K 37/04

(54) **INTERFACE HOMME/MACHINE POUR VEHICULE AUTOMOBILE**
MENSCH-MASCHINE-SCHNITTSTELLE FÜR EIN KRAFTFAHRZEUG
HUMAN-MACHINE INTERFACE FOR A MOTOR VEHICLE

(30) Priorité: 21.07.2009 FR 0955086
(43) Date de publication de la demande: 30.05.2012
(73) Titulaire: Valeo Systèmes Thermiques, 78320 La Verriere (FR)
(72) Inventeur: AUTRAN, Frédéric, F-75018 Paris (FR); EL KHOURY, Ziad, F-92160 Antony (FR); LAFFERAYRIE, Jean-David, F-94000 Creteil (FR)
(74) Mandataire: Pothmann, Karsten
(86) Numéro de dépôt international: PCT/FR2010/000497
(87) Numéro de publication internationale: WO 2011/010009

(56) Documents cités:
- EP-A1- 0 889 304
- EP-A1- 1 379 082
- GB-A- 2 416 338
- US-A1- 2005 168 330
- US-A1- 2006 181 399
- US-A1- 2009 174 682

## Description

### Domaine technique de l'invention

La présente invention concerne une interface homme/machine pour véhicule automobile ainsi qu'un procédé de fabrication d'une telle interface homme/machine.

Il est connu de munir les véhicules automobiles, dans une zone centrale de leur planche de bord, d'une interface homme/machine comprenant un écran multifonction permettant d'afficher des informations, par exemple relatives à un lecteur multimédia ou à une assistance de positionnement satellite.

Dans certains cas, cet écran multifonction présente un écran tactile permettant sa commande par de simples contacts de l'écran.

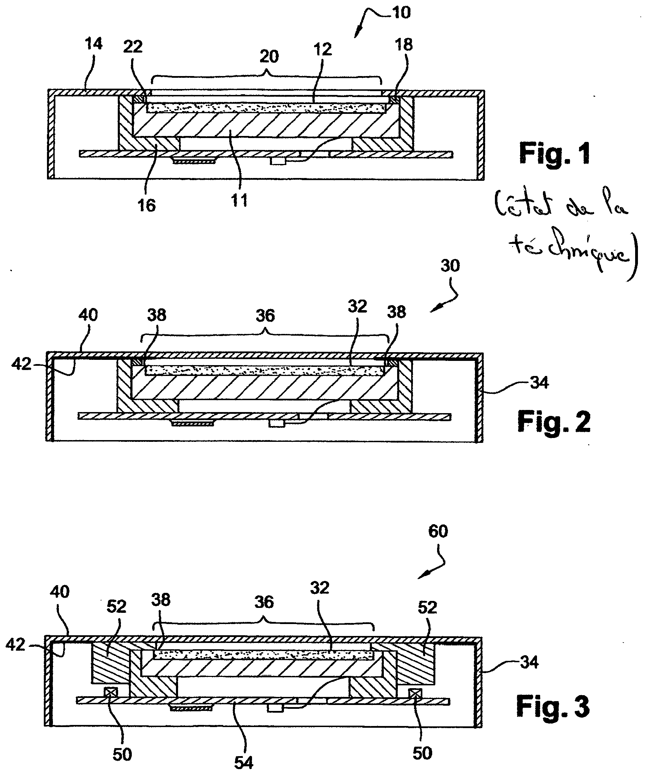

En référence à la figure 1 est représentée en coupe une telle interface homme/machine 10 connue. Typiquement, cette interface homme/machine 10 comprend un module 11 à technologie TFT - pour « Thin Film Transistor » - en anglais muni d'un écran 12 destiné à afficher des informations à l'usage d'un utilisateur.

Ce module TFT 11 est placé dans un boîtier, ou capot, 14 assurant l'intégration de l'ensemble des éléments de l'interface homme/machine 10 en un seul bloc, notamment au moyen d'une pièce support 16 et d'un joint d'étanchéité 18.

La fabrication d'une telle interface homme/machine 10 sous la forme de bloc permet d'intégrer aisément cette dernière dans la planche d'un véhicule par simple insertion du bloc dans un logement dédié.

Il convient de noter que le boîtier 14 présente une ouverture 20 correspondant au contour 22 de l'écran 12 afin de permettre à un utilisateur de visualiser les informations affichées par écran 12.

De telles interfaces homme/machine, comme celle décrite à titre d'exemple dans le document US 2006/181399, présentent de nombreux inconvénients. Un premier inconvénient résulte du contour 22 de l'écran 12 d'affichage, généralement rectangulaire selon la form standard d'un écran d'affichage, qui limit les styles t/ou les conceptions d planches de bord d vant intégrée cett form imposée.

Un second inconvéni nt réside dans l'apparence modulaire d'une planche de bord comprenant une telle interface homme/machine 10 pour écran multifonction.

De fait, cette dernière est généralement située dans une zone centrale de la planche de bord, au voisinage d'autres interfaces homme/machine telles qu'un tableau de commande d'une climatisation et/ou d'un poste radio.

Dès lors, le tableau de bord présente un ensemble d'interfaces homme/machine qui semblent indépendantes entre elles, dans leur conception et/ou leur réalisation, ce qui diminue la qualité perçue par leur utilisateur.

La présente invention vise à résoudre au moins un des inconvénients précédemment mentionnés. C'est pourquoi, elle concerne une interface homme/machine, selon l'objet de la revendication 1.

Une telle interface présente de nombreux avantages. Notamment, elle permet de supprimer la perception modulaire d'une planche de bord intégrant cette interface homme/machine.

En outre, une telle interface homme/machine permet de modifier, totalement ou partiellement, la perception du contour de l'écran multifonction, ce qui accroît les styles et/ou les conceptions possibles des planches de bord devant intégrées une interface conforme à l'invention.

De fait, la forme du contour perçu par un utilisateur d'une interface homme/machine conforme à l'invention peut être aisément et simplement adaptée à un style et/ou à une conception donnée en adaptant l'apparence de la façade recouvrant l'écran et son contour.

Selon une réalisation, la surface commun présente une transparence variable de telle sorte que le contour de l'écran visible pour un utilisateur de l'interface homme/machin est distinct du contour de l'écran.

Dans une réalisation, la transparence variable de la surface commune est générée par un pigment de densité et/ou de concentration variable sur la surface commune.

Dans une réalisation, les sources lumineuses comprennent des guides de lumière et/ou des prismes agencés de façon à émettre leur rayonnement lumineux dans la même direction que l'écran.

Selon une réalisation, les sources lumineuses sont maintenues sur une carte électronique mise en oeuvre pour le fonctionnement de l'écran.

Dans une réalisation, les sources lumineuses bordant l'écran multifonction sont reliées à une source lumineuse de l'écran.

Selon une réalisation, l'interface homme/machine est munie d'une surface tactile.

Dans une réalisation, la surface commune recouvre également au moins un des éléments suivants: un tableau de commande, une commande, un indicateur.

L'invention concerne également un procédé d'assemblage d'une interface homme/machine, selon l'objet de la revendication 9.

D'autres caractéristiques et avantages de l'invention ressortiront clairement de la description qui en est donnée ci-dessous, à titre indicatif et nullement limitatif, en référence aux différentes figures annexées qui montrent :
- à la figure 1, déjà décrite, une vue en coupe d'une interface homme/machine connue munie d'un écran multifonction,
- aux figures 2 et 3, des vues en coupe d'interfaces homme/machine conformes à l'invention,
- à la figure 4 une vue de face d'une interface homme/machine pourvue d'une surface commune conforme à l'invention, et
- à la figure 5 une vue de face de l'interface homme/machine de la figure 5 dépourvue de sa surface commune conforme à l'invention.

### Description des formes de réalisation préférées de l'invention

Les éléments identiques, par structure ou par fonction, apparaissant sur différentes figures conservent, sauf précision contraire, les mêmes références. En référence à la figure 2, une interface homme/machine 30 comprend un écran multifonction 32 agencé à un boîtier 34 destiné à être logé dans le tableau de bord d'un véhicule.

Ce boîtier 34 présente une ouverture 36, correspondant à un contour 38 de l'écran 32, afin de permettre à un utilisateur de visualiser les informations affichées sur cet écran 32.

Conformément à l'invention, l'écran multifonction 32 et le boîtier 34 sont recouverts par une surface commune 40 de telle sorte que l'interface 30 présente une même façade et apparaît formée d'un seul bloc vis-à-vis de son utilisateur.

En outre, cette interface 30 présente une transparence variable de telle sorte que le contour de l'écran perçu par un utilisateur de l'interface homme/machine 30 soit distinct du contour 38 de l'écran.

Cette transparence variable peut être obtenue par un dépôt ou par une insertion d'un matériau comprenant un pigment 42 de densité et/ou de concentration variable sur la surface commune, par exemple afin d'obtenir un dégradé dans la transparence d la surface commune 40.

A titre d'exemple, la surface commune 40 peut être formée par du polycarbonate (PC) tandis que le pigment peut être déposé sur cette surface 40 par sérigraphie ou par collage d'un produit - typiquement des bandes - comprenant ce pigment 42.

Grâce à l'utilisation de ce pigment 42, il est possible de masquer totalement ou partiellement le contour 38 de l'écran 32 de façon à donner un contour apparent à cet écran en accord avec le style et/ou la conception de la planche de bord à laquelle il est destiné.

En outre, cette partie teintée peut masquer des éléments techniques associés à l'écran tels qu'une carte électronique ou un support.

Finalement, il convient de noter que l'interface homme/machine présente une surface externe lisse et régulière grâce à cette surface commune.

Toutefois une telle réalisation génère un contraste important entre la surface commune 40 munie du pigment 42 et l'écran 32, notamment lorsque ce dernier est activé et génère un rayonnement lumineux contrairement au pigment 42 qui tend à absorber un tel rayonnement lumineux.

Afin de permettre notamment de limiter ce contraste, dans une réalisation de l'invention, une interface homme/machine 60 (figure 3) comprend également des sources lumineuses 50 bordant l'écran multifonction.

Ces sources lumineuses 50 sont destinées à émettre un rayonnement lumineux, pratiquement identique au rayonnement lumineux généré par l'écran multifonction, vis-à-vis d'un utilisateur de l'interface homme/machine.

A cet effet, lors de l'assemblage de l'interface homme/machine, par exemple dans le tableau de bord, on règle le rayonnement lumineux généré par l'écran sur une longueur d'onde et/ou une intensité pratiquement identique(s) à la longueur d'onde et/ou à l'intensité du rayonnement lumineux généré par ces sources lumineuses, généralement des diodes.

Par ailleurs, les sources lumineuses 50 sont associées à des guides du lumière 52 et/ou à des prismes agencés de façon à émettre leur rayonnement lumineux dans la même direction que l'écran 32 de façon à modifier le contour de l'écran perçu par un utilisateur de l'interface homme/machine.

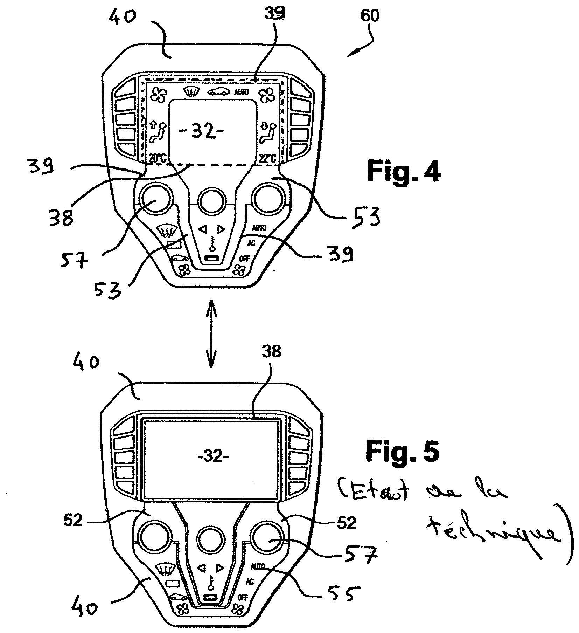

A titre d'exemple, la figure 4 illustre une telle interface homme/machine 60 qui présente, vis-à-vis de son utilisateur, un contour 39 d'écran multifonction 32 distinct du contour réel 38 - représenté en pointillés sur la figure 4 et en trait continu sur la figure 5.

De fait, comme illustré sur cette figure 5 où cette interface homme/machine 60 est représentée sans sa surface commune 40 à transparence variable, il apparaît que la forme apparente de l'écran pour un utilisateur est également modifiée, d'une part, par la dissimulation de certains contour de l'écran 32 rectangulaire et, d'autre part, par des guides de lumières 52 qui simulent une extension 53 de la surface de l'écran.

Comme représenté sur la figure 3, les sources lumineuses de ces guides 52 de lumière peuvent être maintenues sur une carte électronique 54 mise en oeuvre pour le fonctionnement de l'écran.

Dans une autre variante, les sources lumineuses bordant l'écran multifonction peuvent être reliées à une source lumineuse de l'écran.

La présente invention est susceptible de nombreuses variantes. Notamment, l'écran peut être muni d'une surface tactile permettant de commander l'interface par simples contacts.

En outre, comme montré sur la figure 4, la surface commune 40 peut également recouvrir un tableau de commande, par exemple de climatisation et/ou de radio, comportant ici des boutons rotatifs 57, et des indicateurs 55.

## Revendications

1. Interface homme/machine (30, 60) comprenant un écran multifonction (32) agencé à un boîtier (34) destiné à être logé dans le tableau de bord d'un véhicule, ce boîtier (34) présentant une ouverture (36) correspondant à un contour (38) de l'écran afin de permettre à un utilisateur de visualiser les informations affichées sur cet écran (32), et l'écran (32) et le boîtier (34) étant recouverts par une surface commune (40) formant une même façade pour l'écran (32) et le boîtier (34), **caractérisée en ce qu'**elle comprend des sources lumineuses (50, 52), bordant l'écran (32), destinées à générer un rayonnement lumineux d'une longueur d'onde et/ou d'une intensité pratiquement identique à la longueur d'onde et/ ou l'intensité du rayonnement lumineux généré par l'écran (32).

2. Interface homme/machine (60) selon la revendication 1 **caractérisée en ce que** les sources lumineuses (50, 52) comprennent des guides de lumière et/ou des prismes agencés de façon à émettre leur rayonnement lumineux dans la même direction que l'écran (32).

3. Interface homme/machine (60) selon la revendication 1 ou 2 **caractérisée en ce que** les sources lumineuses (50, 52) sont maintenues sur une carte électronique (54) mise en oeuvre pour le fonctionnement de l'écran (32).

4. Interface homme/machine (60) selon l'une des revendications 1, 2 ou 3 **caractérisée en ce que** les sources lumineuses (50, 52) bordant l'écran multifonction sont reliées à une source lumineuse de l'écran (32).

5. Interface homme/machine selon l'une des revendications précédentes, **caractérisé en ce que** la surface commune présente une transparence variable de telle sorte que le contour de l'écran visible pour un utilisateur de l'interface homme/machine (30, 60) est distinct du contour (38) de l'écran (32).

6. Interface homme/machine (30, 60) selon la revendication 5 **caractérisée en ce que** la transparence variable de la surface commune (40) est générée par un pigment (42) de densité et/ou de concentration variable sur la surface commune (40).

7. Interface homme/machine (30, 60) selon l'une des revendications précédentes **caractérisée en ce qu'**elle est munie d'une surface tactile.

8. Interface homme/machine (30, 60) selon l'une des revendications précédentes **caractérisée en ce que** la surface commune recouvre également au moins un des éléments suivants: un tableau de commande, une commande, un indicateur.

9. Procédé d'assemblage d'une interface homme/machine (30, 60) comprenant un écran multifonction agencé à un boîtier (34) destiné à être logé dans le tableau de bord d'un véhicule, ce boîtier (34) présentant une ouverture correspondant à un contour (38) de l'écran (32) afin de permettre à un utilisateur de visualiser les informations affichées sur cet écran, et l'interface comprenant une surface commune (40) conformément à l'une des revendications précédentes, on insère l'interface homme/machine dans le tableau de bord en un seul bloc, **caractérisée en ce que**, l'interface comprenant des sources lumineuses (50, 52), bordant l'écran (32), on règle le rayonnement lumineux généré par l'écran sur une longueur d'onde et/ou une intensité pratiquement identique(s) à la longueur d'onde et/ou à l'intensité du rayonnement lumineux généré par ces sources lumineuses (32).

## Patentansprüche

1. Mensch-Maschine-Schnittstelle (30, 60), umfassend einen Multifunktionsbildschirm (32), der an einem Gehäuse (34) vorgesehen ist, das dazu bestimmt ist, in dem Armaturenbrett eines Fahrzeugs angeordnet zu sein, wobei dieses Gehäuse (34) eine Öffnung (36) entsprechend einer Kontur (38) des Bildschirms aufweist, um es einem Benutzer zu ermöglichen, die auf diesem Bildschirm (32) angezeigten Informationen zu visualisieren, und wobei der Bildschirm (32) und das Gehäuse (34) mit einer gemeinsamen Oberfläche (40) bedeckt sind, die eine selbe Vorderseite für den Bildschirm (32) und das Gehäuse (34) bildet, **dadurch gekennzeichnet, dass** sie Lichtquellen (50, 52) umfasst, die den Bildschirm (32) umrahmen und dazu bestimmt sind, eine Lichtstrahlung mit einer Wellenlänge und/oder einer Stärke praktisch identisch mit der Wellenlänge und/oder der Stärke der vom Bildschirm (32) erzeugten Lichtstrahlung zu erzeugen.

2. Mensch-Maschine-Schnittstelle (60) nach Anspruch 1, **dadurch gekennzeichnet, dass** die Lichtstrahlen (50, 52) Lichtleiter und/oder Prismen umfassen, die dazu vorgesehen sind, ihr Lichtstrahlung in dieselbe Richtung wie der Bildschirm (32) zu entsenden.

3. Mensch-Maschine-Schnittstelle (60) nach Anspruch 1 oder 2, **dadurch gekennzeichnet, dass** die Lichtquellen (50, 52) auf einer Elektronikkarte (54) gehalten werden, die für die Funktion des Bildschirms (32) eingesetzt wird.

4. Mensch-Maschine-Schnittstelle (60) nach einem der Ansprüche 1, 2 oder 3, **dadurch gekennzeichnet, dass** die Lichtquellen (50, 52), die den Multifunktionsbildschirm umrahmen, mit einer Lichtquelle des Bildschirms (32) verbunden sind.

5. Mensch-Maschine-Schnittstelle nach einem der vorhergehenden Ansprüche, **dadurch gekennzeichnet, dass** die gemeinsame Oberfläche eine variable Transparenz aufweist, so dass die für einen Benutzer der Mensch-Maschine-Schnittstelle (30, 60) sichtbare Kontur des Bildschirms zur Kontur (38) des Bildschirms (32) unterschiedlich ist.

6. Mensch-Maschine-Schnittstelle (30, 60) nach Anspruch 5, **dadurch gekennzeichnet, dass** die variable Transparenz der gemeinsamen Oberfläche (40) durch ein Pigment (42) variabler Dichte und/oder Konzentration auf der gemeinsamen Oberfläche (40) erzeugt wird.

7. Mensch-Maschine-Schnittstelle (30, 60) nach einem der vorhergehenden Ansprüche, **dadurch gekennzeichnet, dass** sie mit einem Touchscreen versehen ist.

8. Mensch-Maschine-Schnittstelle (30, 60) nach einem der vorhergehenden Ansprüche, **dadurch gekennzeichnet, dass** die gemeinsame Oberfläche auch mindestens eines der folgenden Elemente bedeckt: Armaturenbrett, Steuerung, Anzeige.

9. Verfahren zur Montage einer Mensch-Maschine-Schnittstelle (30, 60), umfassend einen Multifunktionsbildschirm, der an einem Gehäuse (34) vorgesehen ist, das dazu bestimmt ist, in dem Armaturenbrett eines Fahrzeugs angeordnet zu sein, wobei dieses Gehäuse (34) eine Öffnung entsprechend einer Kontur (38) des Bildschirms (32) aufweist, um es einem Benutzer zu ermöglichen, die auf diesem Bildschirm angezeigten Informationen zu visualisieren, und wobei die Schnittstelle eine gemeinsame Oberfläche (40) nach einem der vorhergehenden Ansprüche umfasst, wobei die Mensch-Maschine-Schnittstelle in das Armaturenbrett in einem einzigen Block eingesetzt wird, **dadurch gekennzeichnet, dass** die Schnittstelle Lichtquellen (50, 52) umfasst, die den Bildschirm (32) umrahmen, dass die von dem Bildschirm erzeugte Lichtstrahlung auf eine Wellenlänge und/oder eine Stärke praktisch identisch mit der Wellenlänge und/oder der Stärke der vom Bildschirm (32) erzeugten Lichtstrahlung eingestellt wird.

## Claims

1. Human-machine interface (30, 60) comprising a multifunction screen (32) arranged in a housing (34) intended to be housed in the dashboard of a vehicle, this housing (34) having an opening (36) corresponding to an outline (38) of the screen in order to enable a user to view the information displayed on this screen (32), and the screen (32) and the housing (34) being covered by a common surface (40) forming a single front panel for the screen (32) and the housing (34), **characterized in that** it comprises light sources (50, 52), bordering the screen (32), intended to generate a light radiation having a wavelength and/or an intensity that is/are practically identical to the wavelength and/or the intensity of the light radiation generated by the screen (32).

2. Human-machine interface (60) according to Claim 1, **characterized in that** the light sources (50, 52) comprise light guides and/or prisms arranged so as to emit their light radiation in the same direction as the screen (32).

3. Human-machine interface (60) according to Claim 1 or 2, **characterized in that** the light sources (50, 52) are maintained on an electronic card (54) implemented for the operation of the screen (32).

4. Human-machine interface (60) according to one of Claims 1, 2 or 3, **characterized in that** the light sources (50, 52) bordering the multifunction screen are linked to a light source of the screen (32).

5. Human-machine interface according to one of the preceding claims, **characterized in that** the common surface has a variable transparency such that the outline of the screen visible to a user of the human-machine interface (30, 60) is distinct from the outline (38) of the screen (32).

6. Human-machine interface (30, 60) according to Claim 5, **characterized in that** the variable transparency of the common surface (40) is generated by a pigment (42) of variable density and/or concentration on the common surface (40).

7. Human-machine interface (30, 60) according to one of the preceding claims, **characterized in that** it is provided with a touch-sensitive surface.

8. Human-machine interface (30, 60) according to one of the preceding claims, **characterized in that** the common surface also covers at least one of the following elements: a control panel, a control, an indicator.

9. Method for assembling a human-machine interface (30, 60) comprising a multifunction screen arranged in a housing (34) intended to be housed in the dashboard of a vehicle, this housing (34) having an opening corresponding to an outline (38) of the screen (32) in order to enable a user to view the information displayed on this screen, and, the interface comprising a common surface (40) in accordance with one of the preceding claims, the human-machine interface is inserted into the dashboard as a single-block, **characterized in that**, the interface comprising light sources (50, 52), bordering the screen (32), the light radiation generated by the screen is set to a wavelength and/or an intensity that is/are practically identical to the wavelength and/or the intensity of the light radiation generated by these light sources (32).
